# EUROPEAN PATENT SPECIFICATION

(11) **EP 0 674 605 B1**
(45) Date of publication and mention of the grant of the patent: **29.12.1997**
(21) Application number: 94927733.9
(22) Date of filing: 28.09.1994
(51) Int. Cl.: C04B 18/10, F23G 5/40, F23G 7/10

(54) **IMPROVEMENTS IN THE PRODUCTION OF BIOGENETIC SILICA FROM ORGANIC PLANT MATTER**
VERBESSERUNGEN IN DER HERSTELLUNG VON BIOGENETISCHER KIESELSÄURE AUS ORGANISCH PFLANZLICHEM MATERIAL
AMELIORATIONS APPORTEES A LA PRODUCTION DE SILICE BIOGENE A PARTIR D'UNE MATIERE VEGETALE

(30) Priority: 15.10.1993 GB 9321359
(43) Date of publication of application: 04.10.1995
(73) Proprietor: Kingsway Group PLC, London WC1V 7HJ (GB)
(72) Inventor: COOK, Colin, Brian, Rochester Kent ME3 8TA (GB); SPEARE, Philip, Reginald, Stuart, London SW20 0PX (GB); TEBBIT, John, Beresford, Headcorn Kent ME14 9RL (GB)
(74) Representative: Prentice, Raymond Roy
(86) International application number: GB9402106
(87) International publication number: WO9510488

(56) References cited:
- DE-A- 2 559 527
- GB-A- 969 538
- US-A- 2 127 328
- US-A- 4 037 543
- US-A- 4 049 464
- US-A- 4 730 564
- CHEMICAL ABSTRACTS, vol. 113, no. 4, 23 July 1990, Columbus, Ohio, US; abstract no. 28326m, A.F.GALAL ET AL. 'Rice husk ash in portland blended cement'
- V.M.MALHOTRA 'Fly Ash, Silica Fume,Slag, and Natural Pozzolans in Concrete; Proceedings 4th International Conference, Istanbul, Turkey, May 1992' May 1992 , ACI S.SUGITA et al. : 'Evaluation of Pozzolanic Activity of Rice Husk Ash' Volume I see page 495 - page 512

## Description

This invention relates to improvements in the production of biogenetic silica from organic plant matter and is particularly concerned with the production of ash from rice hulls or husks, rice stalks, equisetum (commonly known as horsetails), palm leaves and in particular those of the palmyra palm as well as sunflowers and bamboo.

The disposal of rice husks is a substantial problem for rice growers since the husks are not suitable for use as fertilisers and up until now have had to be disposed of either by burying or burning. Space for burying is frequently not available in heavily populated areas and burning creates undesirable atmospheric pollution. However, as is known, rice husks contain a high amount of biogenetic silica and it is possible to produce pozzolanic material from rice husk ash which has great potential economic advantages for developing countries that have large quantities of rice husks readily available and virtually free of cost.

Attempts have previously been made to utilise rice husks mixed with Portland cement to make blocks. It has generally been possible to meet strength requirements but the cup-like form of the husks requires an excessive amount of cement and thus such blocks are not economic. Accordingly, it has been proposed to reduce the rice husks to ash form for use in the production of pozzolanic material. Reference is made in this connection to the article by Sugita, Shoya and Tokuda in the Proceedings of the Fourth International Conference held at Istanbul, Turkey in May 1992. Reference is also made to DE-A-2559527 which relates to the conversion of rice hulls to ash by combustion.

In the conversion of rice husks to ash, the combustion process removes the organic matter and leaves a silica rich residue. When rice husks are first heated, weight loss occurs up to 100°C by evaporation of absorbed water. At about 350°C, the volatiles ignite causing further weight loss and the husks begin to burn. From 400°C to 500°C, the residual carbon oxidises and the majority of weight loss occurs in this period. The silica in the ash is still in amorphous form. Above 600°C, some conversion to quartz occurs.

In previous work carried out on rice husk ash, the ash was produced by burning large quantities of rice husks in a heap in a furnace, often for long periods. Under these conditions, the optimum burning regime had been found to be a temperature of 450°C for 3 hours. The energy requirement under these conditions makes production uneconomic for most, if not all, commercial applications. Similar problems are encountered with the combustion of other organic plant matter of the kind referred to above.

The present invention therefore seeks to improve the production of rice husk ash to enable it to be produced economically on a commercial basis and the primary aim of the invention is to provide an improved method of producing biogenetic silica from organic plant matter.

According to the invention there is provided a method for the production of biogenetic silica from organic plant matter in which the plant matter is fed continuously to an inclined rotating furnace maintained at a temperature of between 400 and 500°C, the material is retained in the furnace for no more than about 30 minutes and biogenetic silica is continuously collected from the furnace and allowed to cool.

Preferably, the rotating furnace is maintained at a temperature of about 450°C and the material is desirably retained in the furnace for between 15 and 30 minutes.

The organic plant matter is desirably fed into the upper end of the inclined rotary furnace via a hopper. The biogenetic silica, which normally takes the form of ash, may be collected from the lower end of the furnace via a chute.

The organic plant matter may be ground to a powder before being fed to the furnace.

According to a preferred embodiment of the invention, the organic plant matter takes the form of rice husks or rice hulls and the biogenetic silica takes the form of ash.

The present invention also relates to apparatus for performing the above-described method.

US-A-4037543 discloses a carbonization apparatus and furnace for recycling cellulosic waste such as wood chips, sawdust, paper, grain and vegetable hulls and the like in which the apparatus includes an inclined tube or retort which is mounted for rotation about its longitudinal axis, an auger for feeding wood chips or other cellulosic waste to the higher end portion of the retort and a hopper for collecting combusted material from the other end of the retort. Heating of the material in the retort is achieved by means of a gas jet which is directed longitudinally into the higher end of the retort.

A travelling incinerator is disclosed in US-A-2127328 which has an inclined drum for containing waste material which is fed to the drum at its upper end, a drive shaft and gearing for rotating the drum about its longitudinal axis, a series of burner nozzles and a discharge opening for combusted material adjacent to the lower end of the drum.

The present invention aims to provide an improvement over the known apparatuses.

Accordingly, another aspect of the present invention provides apparatus for the production of biogenetic silica from organic plant matter, said apparatus including a furnace which comprises an inclined tube mounted on support stands for rotation about its longitudinal axis, means for rotating the inclined tube about its said longitudinal axis and a plurality of heating elements located in the furnace substantially throughout the length of the tube; a hopper for receiving organic plant matter; means for feeding the organic plant matter from the hopper to the furnace at one end of the tube and means for collecting combusted material from the other end of the tube, characterised in that the furnace is provided with a smoke outlet which leads to a filter mounted in a rotating holder and leading to an air extraction system.

The invention will now be explained and described in detail with reference to the drawings, in which:-
Fig. 1 is a schematic diagram of a furnace for conducting tests for the production of rice husk ash;
Fig. 2 is a graph showing the grading curve for ground rice husks;
Figs. 3-7 are graphs showing the temperature-time relationships for tests on rice husks using the furnace shown in Fig. 1; and
Fig. 8 is a diagrammatic representation of a furnace suitable for the continuous production of rice husk ash by the method according to the invention.

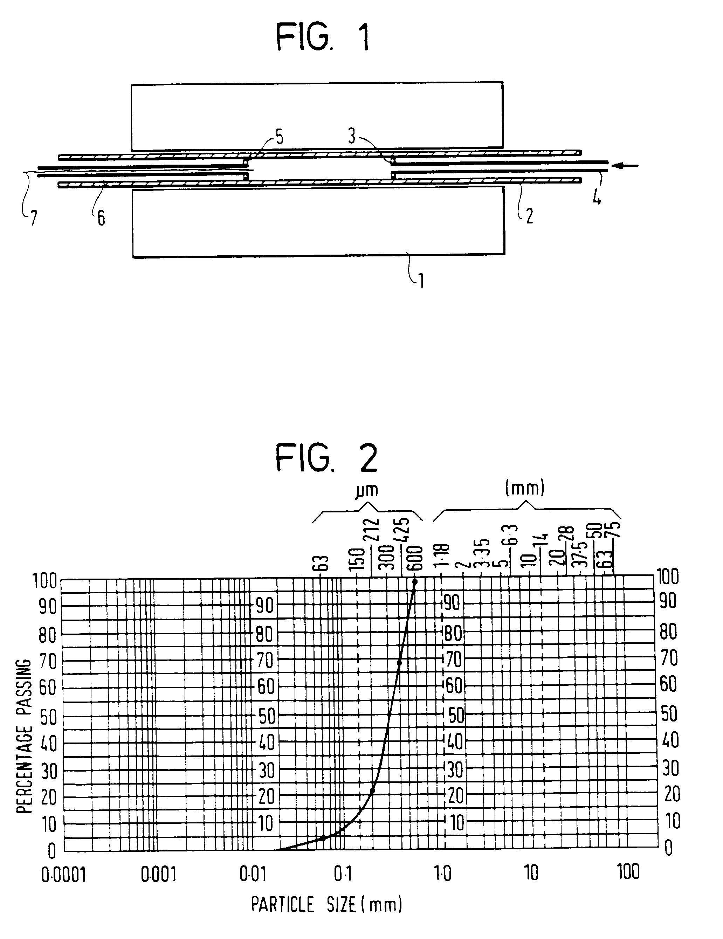

Tests have been carried out on rice husks using the tube furnace 1 shown in Fig. 1 of the drawings which had a heated length of 700mm and a tube of 75mm inner diameter. A ceramic lining tube 2 of 60mm inner diameter was then set up within the furnace and was supported by a friction drive arrangement (not shown) to allow rotation. In order to retain material in the central section (approx. 300mm) of the tube during combustion, two loosely fitting discs 3, 5 were inserted on the ends of respective tubes 4, 6. Air was passed through the tube 4 as indicated by the arrow and a thermocouple 7 was inserted in the other tube 6.

Rice husks were obtained from Tarragona and tests were carried out on ground and unground husk. The grading of the ground husks is shown in Figure 2 of the drawings. The bulk densities of the ground and unground husks were 513 and 107 kg/m³ respectively. Two temperatures and two different combustion times were chosen and in all five tests were conducted as follows:-

| | | Target temp. | Time |
|---|---|---|---|
| Test 1 | Ground husk | 450°C | 30 min |
| Test 2 | Ground husk | 750°C | 60 min |
| Test 3 | Ground husk | 450°C | 60 min |
| Test 4 | Ground husk | 750°C | 30 min |
| Test 5 | Unground husk | 450°C | 60 min |

The upper target temperature was limited to 750°C in order to ensure that no overshoot above the acceptable limit could occur.

The tube was first charged with the husk and the tube allowed to rotate for a short period in order to distribute the material uniformly. A speed of rotation of 1 rpm was adopted. The furnace was then set to the target temperature. Both the temperature in the furnace windings and the inner tube were monitored and minor adjustments made as necessary during the course of the tests.

In order to ensure a free tumbling effect, the tube was filled to a depth of no more than about one-third of its diameter. For the ground husk roughly 90g was introduced. In the case of the unground husk it was necessary to place a greater than ideal bulk in order to ensure a reasonable return; 42g was introduced in this case.

After maintaining the furnace at the set temperature for the required period it was allowed to cool. For the tests conducted at 450°C it was possible to withdraw the inner tube immediately and allow it to cool protected against excessive cooling rates, which might have damaged it, by an insulating blanket or a foil shield. At the higher temperature it was not possible to remove the inner tube and it had to be left overnight to cool.

The ash was then raked from the tube and material which was retained in the central section throughout the combustion was separated from that which had been transported further along the tube.

Although the temperature rise of the furnace was quite rapid, it has to be accepted that the ash was held at a high temperature for an additional period whilst cooling was allowed. This was not a serious problem at the lower temperature, but must clearly be allowed for in interpreting the findings from the high temperature tests.

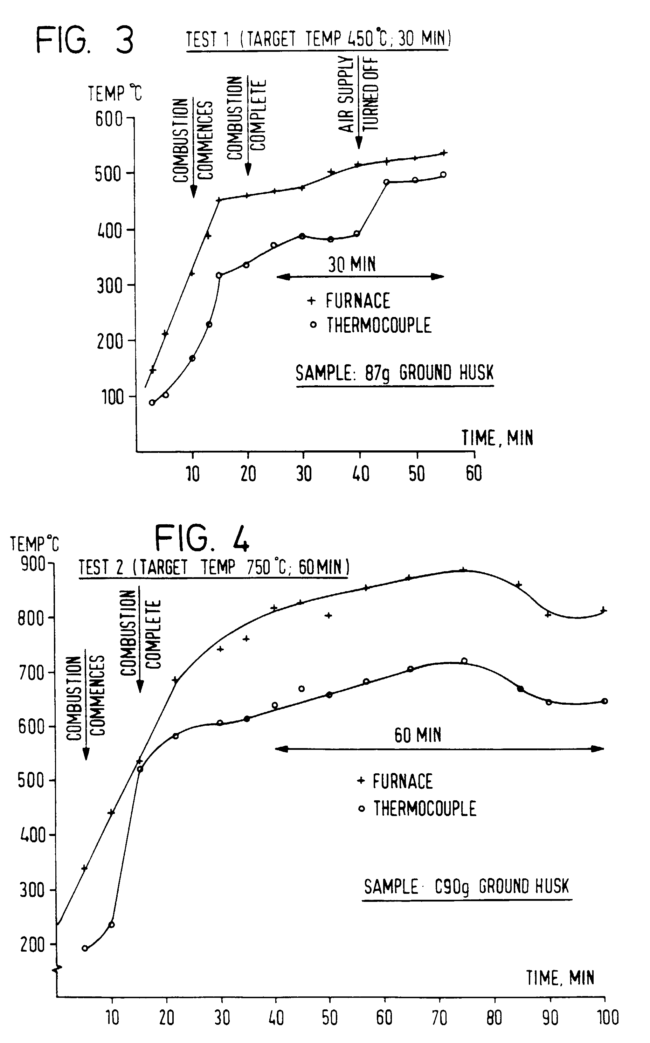

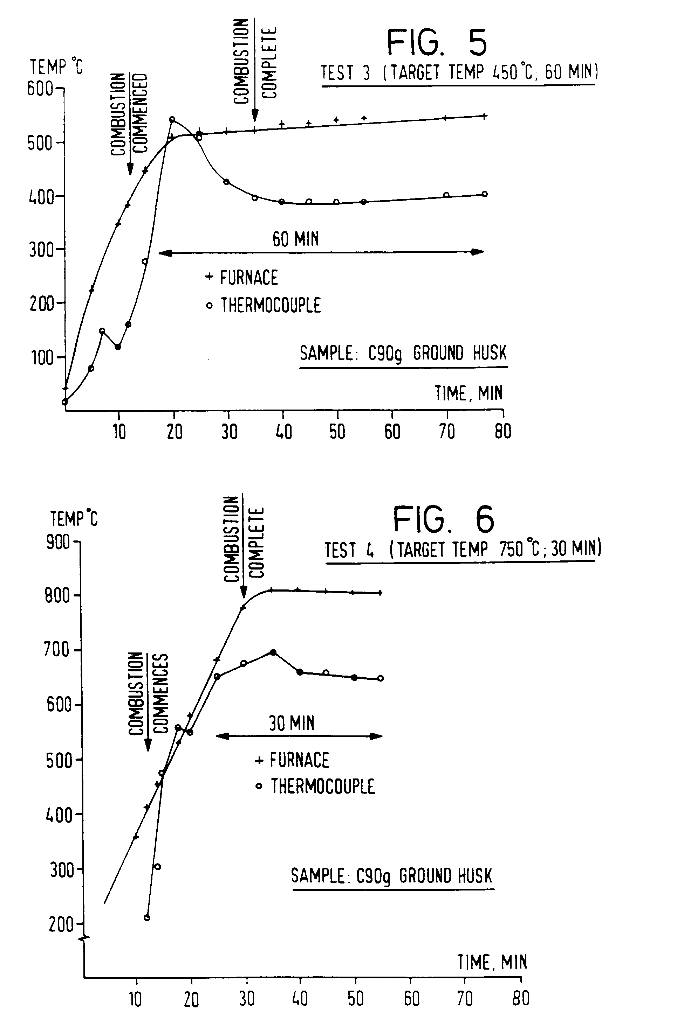

Figures 3-7 show the temperature-time relationships for the tests and the main events occurring during the tests are indicated on these graphs together with the 30 or 60 minute hold period. The furnace temperature and the temperature in the lining tube are shown.

The furnace temperature was controlled by a thermocouple in the furnace windings and clearly the temperature in the inner tube would be lower than this until equilibrium had been reached, with the possible exception of the temperature being raised temporarily due to the combustion itself. The furnace was initially set for a temperature 50°C above the target and minor adjustments made in the later stages as necessary.

It was found that the temperature recorded by the thermocouple in the lining tube was lowered by about 70°C by the passage of air through the tube and this must be allowed for when interpreting the results.

For handling reasons it was necessary to introduce the husk into the furnace cold and then raise the furnace temperature. As can be seen from the graphs, this occurred fairly rapidly, reaching 500°C within 15 minutes. Early in the heating, water vapour was driven off and smoke emission commenced when the temperature in the lining tube reached 180°C. At this stage the air supply was turned on. During the combustion phase there was a rapid rise in temperature in the lining tube, briefly overtaking the furnace temperature in tests 3, 4 and 5. Combustion was completed within 10-20 minutes, which, in some cases, was before the target temperature was reached.

With the ground husk, some fine, partly burned particles were carried out with the air flow, but the unground husk was retained within the tube.

After burning for the required time, the ash was removed from the tube taking care to separate material which had been transported out of the central section during combustion and using only the material which had been retained in the central section for subsequent analysis.

The analysis of the ash samples was in three parts:
(a) Determination of carbon, hydrogen and nitrogen content,
(b) EDAX analysis to determine the amounts of silicon and metallic elements present,
(c) X-ray diffraction analysis to establish the forms of silica present.

The results of these analyses were as follows, with contents expressed as percentages by weight:

| Element | 1C | 2C | 3C | 4C | 5C |
|---|---|---|---|---|---|
| C | 2.10 | 1.48 | 2.14 | 1.35 | 2.10 |
| H | 0.19 | - | 0.93 | 0.10 | 0.19 |
| N | - | - | - | - | - |
| Si | 87.48 | 86.01 | 86.47 | 84.84 | 93.46 |
| K | 4.98 | 4.92 | 6.27 | 5.97 | 1.26 |
| Fe | 0.87 | 0.35 | 0.63 | 0.86 | 0.01 |
| Cu | 4.49 | 4.33 | 2.94 | 3.72 | 2.37 |
| Zn | 2.18 | 2.35 | 2.59 | 1.99 | 1.60 |
| Ca | - | 2.04 | 1.11 | 2.62 | 1.30 |

The X-rd report on silicon dioxide crystallinity found the following:
- Sample 1C: Almost completely amorphous; small amount (fraction of a percent) of unidentified material, possible a feldspar.
- Sample 2C: Approximately 1% cristabolite; traces of unidentified material (as 1C) and possibly quartz.
- Sample 3C: As 1C.
- Sample 4C: As 2C.
- Sample 5C: Completely amorphous.

It is thought that the traces of unidentified material relates to contamination from a previous use of the grinder. This would be consistent with its possible identification as a feldspar. The same is true of the higher potassium and, to a lesser extent, copper contents of the ground husk ash samples. The grinder had previously been used for clay and soil samples and there is the possibility that contamination occurred.

All samples of ash produced satisfy the requirement of a high amorphous silica content. Hence the principle that a usable ash can be produced at low temperatures and in a short time is established on a small scale. The retention time in the furnace after combustion had no advantageous effect on the end product and could probably be reduced further.

The key factor is to ensure that husks or husk particles are kept separated from each other as far as possible during the combustion, achieved here by the use of a rotating tube furnace with a small charge of material. If too much material is introduced there is a risk that the temperature will rise excessively due to the exotherm during combustion. This is clearly indicated in Test 5, in which a greater volume of material was used and there was a very sharp rise in temperature during combustion. If the temperature reached becomes too high then the crystalline content of the ash will increase.

Pre-grinding of the husk before burning does not appear to offer any advantage in the light of the short combustion time involved. In terms of final ash composition, the unground husk gave the best result.

There are, however, other advantages to be gained from grinding beforehand arising from the increase in the bulk density, namely reduction in transportation costs and permitting a greater furnace throughput. The ground particle size used in these tests was probably smaller than the optimum as some particles were small enough to be transported through the furnace in the airflow despite the fact that this was kept at the lowest possible level.

The tests indicated that rice husk ash could be produced in a relatively short time if the furnace was maintained at 450°C under the right conditions and thus made the ash production on a commercial basis an economic possibility. If the rice husks can be moved through a furnace on a continuous basis and agitated while they are heated, heating times can be reduced to 15 to 20 minutes.

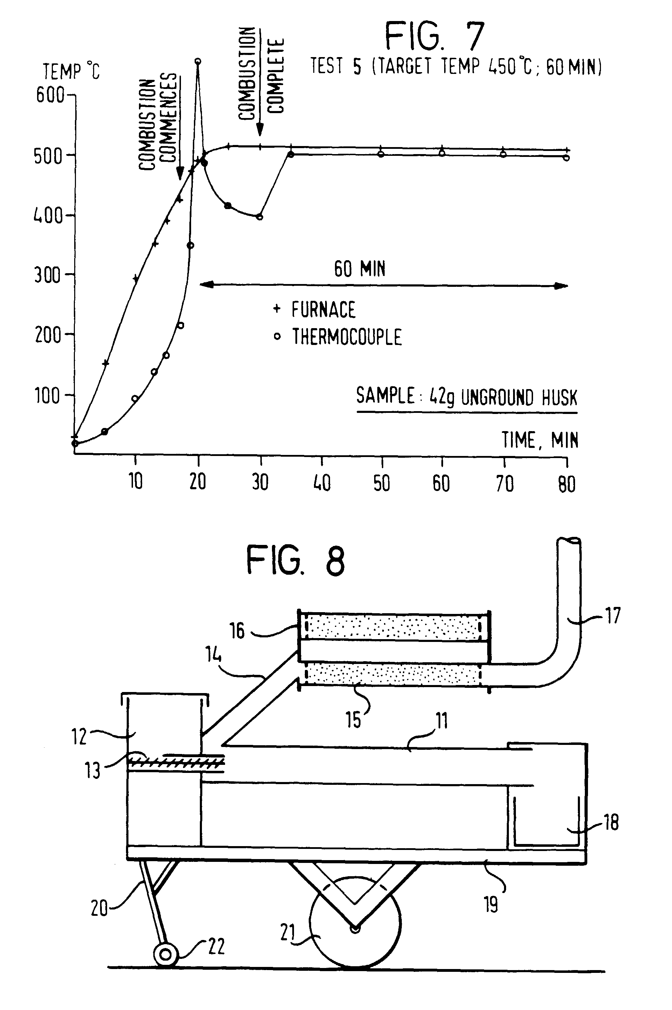

Accordingly, the furnace shown diagrammatically in Fig. 8 of the drawings is employed. As shown in Fig. 8, the furnace comprises an inclined tube 11 which is mounted on support stands (not shown) for rotation about its longitudinal axis by suitable drive means (likewise not shown). The furnace is provided substantially throughout its length with heating elements (also not shown). The furnace is further provided, at or adjacent to its upper end, with a hopper 12 through which rice husks, which may be ground, are fed to the furnace by means of a screw feeder 13. A smoke outlet 14 leads from the tube furnace 11 to a filter 15 which is mounted in a rotating holder 16 and the filtered air is led from the filter 15 to an air extraction system (not shown) via a pipe 17. The end of the furnace tube 11 remote from the feed hopper 12 is provided with an ash collection can 18 at which the ash is collected. The hopper 12, furnace tube 11 and ash collection can 18 are mounted on a platform 19 which can be tilted by means of an adjusting jack 20 to ensure that the hopper 12 is located at a level which is higher than that of the can 18 so that material fed to the furnace tube 11 will tend to pass down the tube from the hopper 12 to the can 18. The platform 19 is further desirably provided with wheels 21 whereby the apparatus is portable and the adjusting jack 20 is desirably also provided with similar but smaller wheels 22.

The furnace is desirably rotated at a speed of about 1 rpm and is set at a temperature of 450°C. The retention time of the rice husks in the furnace is determined by the rate of rotation of the tube 11 and the angle of declination of said tube. However, under ideal conditions it should be possible to collect ash from the can 18 some fifteen minutes after the rice husks enter the furnace from the hopper 12. Thus a continuous production of rice husk ash on a commercially economic basis is assured.

The ash has a high amorphous silica content and can be used for the production of dense concrete and aircrete blocks. Because of the good combustion conditions, the ash also has a low carbon content (approximately 2% by weight) which is a highly desirable feature because a higher level of carbon reduces ash reactivity.

Although the invention has been described above with reference to the production of ash from rice husks it should be noted that the invention is not restricted to the production of rice husk ash but is applicable generally to the production of biogenetic silica from organic plant matter.

## Claims

1. A method for the production of biogenetic silica from organic plant matter in which the plant matter is fed continuously to an inclined rotary furnace maintained at a temperature of between 400 and 500°C, the material is retained in the furnace for no more than about 30 minutes and biogenetic silica is continuously collected from the furnace and allowed to cool.

2. A method according to claim 1, wherein the rotary furnace is maintained at a temperature of about 450°C.

3. A method according to claim 1 or claim 2, wherein the material is retained in the furnace for between 15 and 30 minutes.

4. A method according to any preceding claim, wherein the organic plant material is fed into the upper end of the inclined rotary furnace via a hopper.

5. A method according to any preceding claim, wherein the biogenetic silica is collected from the lower end of the inclined rotary furnace via a chute.

6. A method according to any preceding claim, wherein the organic plant matter is ground to a powder before being fed to the furnace.

7. A method according to any preceding claim, wherein the organic plant matter takes the form of rice husks or rice hulls and the biogenetic silica takes the form of ash.

8. Apparatus for performing the method claimed in any one of the preceding claims, said apparatus including a furnace which comprises an inclined tube (11) mounted on support stands for rotation about its longitudinal axis, means for rotating the inclined tube about its said longitudinal axis and a plurality of heating elements located in the furnace substantially throughout the length of the tube; a hopper (12) for receiving organic plant matter; means for feeding the organic plant matter from the hopper to the furnace at one end of the tube and means for collecting combusted material from the other end of the tube, characterised in that the furnace is provided with a smoke outlet (14) which leads to a filter (15) mounted in a rotating holder (16) and leading to an air extraction system.

9. Apparatus according to claim 8, wherein the means for feeding organic plant matter from the hopper (12) to the tube (11) comprises a screw conveyor (13).

10. Apparatus according to claim 8 or claim 9, wherein the means for collecting combusted material comprise a collection can (18).

11. Apparatus according to any one of claims 8 to 10, wherein the furnace is mounted on a platform (19) having means for adjusting the angle of inclination of the platform and hence of the tube.

12. Apparatus according to claim 11, wherein the adjusting means comprise an adjusting jack (20).

13. Apparatus according to claim 11 or claim 12, wherein the platform is provided with wheels (21) whereby the apparatus is portable.

14. Apparatus according to any one of claims 8 to 13, wherein the means for rotating the tube are arranged to rotate the tube at about 1 rpm.

## Patentansprüche

1. Verfahren zur Herstellung biogenetischer Kieselerde aus organischem Pflanzenmaterial, bei dem das Pflanzenmaterial kontinuierlich einem geneigten Drehofen zugeführt wird, der auf eine Temperatur zwischen 400 und 500°C gehalten wird, wobei das Material in dem Ofen für nicht mehr als 30 Minuten zurückgehalten und biogenetische Kieselerde kontinuierlich dem Ofen abgezogen und abgekühlt wird.

2. Verfahren nach Anspruch 1, bei dem der Drehofen auf eine Temperatur von etwa 450°C gehalten wird.

3. Verfahren nach den Ansprüchen 1 oder 2, bei dem das Material in dem Ofen zwischen 15 bis 30 Minuten verbleibt.

4. Verfahren nach einem der vorangehenden Ansprüchen, bei dem das organische Pflanzenmaterial dem oberen Ende des geneigten Drehofens über einen Bunker zugeführt wird.

5. Verfahren nach einem der vorangehenden Ansprüche, bei dem die biogenetische Kieselerde vom tieferen Ende des geneigten Drehofens über eine Schurre abgezogen wird.

6. Verfahren nach einem der vorangehenden Ansprüche, bei dem das organische Pflanzenmaterial vor der Zufuhr in den Ofen zu einem Pulver gemahlen wird.

7. Verfahren nach einem der vorangehenden Ansprüche, bei dem das organische Pflanzenmaterial die Form von Reisschalen oder Reishülsen hat und die biogenetische Kieselerde die Gestalt von Asche annimmt.

8. Vorrichtung zur Durchführung des beanspruchten Verfahrens nach einem der vorangehenden Ansprüche, welche einen Ofen mit einem geneigten Rohr (11) aufweist, das auf Stützgestelle zur Rotation um seine Längsachse montiert ist, Mittel zum Drehen des geneigten Rohres um seine Längsachse und eine Vielzahl von Heizelementen hat, die in dem Ofen im Wesentlichen über die Länge des Rohres angeordnet sind und wobei die Vorrichtung einen Bunker (12) zum Aufnehmen organischen Pflanzenmaterials, Mittel zum Zuführen des organischen Pflanzenmaterials aus dem Bunker in den Ofen an einem Ende des Rohres und Mittel zum Sammeln verbrannten Materials vom anderen Ende des Rohres hat, **dadurch gekennzeichnet**, dass der Ofen mit einem Rauchauslass (14) versehen ist, der zu einem Filter (15) führt, der in einem umlaufenden Halter (16) angeordnet ist und zu einem Luftabzugssystem führt.

9. Vorrichtung nach Anspruch 8, , bei der die Mittel zum Zuführen organischen Pflanzenmaterials aus dem Bunker (12) zu dem Rohr (11) einen Schraubenförderer (13) aufweisen.

10. Vorrichtung nach den Ansprüchen 8 oder 9, bei dem das Mittel zum Sammeln des verbrannten Materials ein Sammelbehälter (18) ist.

11. Vorrichtung nach einem der Ansprüche 8 bis 10, bei der der Ofen auf einer Plattform (19) montiert ist, welche Mittel zum Einstellen des Neigungswinkels der Plattform und damit des Rohres hat.

12. Vorrichtung nach Anspruch 11, bei der die Einstellmittel eine einstellbare Stütze (20) aufweisen.

13. Vorrichtung nach Anspruch 11 oder 12, bei der die Plattform mit Rädern (21) versehen ist, wodurch die Vorrichtung verfahrbar wird.

14. Vorrichtung nach einem der Ansprüche 8 bis 13, bei der die Mittel zum Drehen des Rohres zum Drehen des Rohres mit ungefähr 1 U/min ausgebildet sind.

## Revendications

1. Procédé de production de silice biogène à partir d'une matière végétale organique, dans lequel la matière végétale est conduite en continu vers un four rotatif incliné maintenu à une température comprise entre 400 et 500°C, la matière est retenue dans le four pendant une période ne durant pas plus qu'environ 30 minutes et la silice biogène est continuellement collectée du four et on la laisse refroidir.

2. Procédé selon la revendication 1, dans lequel le four rotatif est maintenu à une température d'environ 450°C.

3. Procédé selon la revendication 1 ou la revendication 2, dans lequel la matière est retenue dans le four pendant une période comprise entre 15 et 30 minutes.

4. Procédé selon l'une quelconque des revendications précédentes, dans lequel la matière végétale organique est introduite, par l'intermédiaire d'une trémie, dans l'extrémité supérieure du four rotatif incliné.

5. Procédé selon l'une quelconque des revendications précédentes, dans lequel la silice biogène est collectée, à l'aide d'une goulotte, de l'extrémité inférieure du four rotatif incliné.

6. Procédé selon l'une quelconque des revendications précédentes, dans lequel la matière végétale organique est broyée jusqu'à former une poudre, avant d'être acheminée au four.

7. Procédé selon l'une quelconque des revendications précédentes, dans lequel la matière végétale organique prend la forme de coques, de balles ou de téguments de riz et la silice biogène prend la forme de cendres.

8. Appareil pour mettre en oeuvre le procédé revendiqué dans l'une quelconque des revendications précédentes, ledit appareil comprenant un four qui comprend un tube incliné (11) monté sur des supports pour pouvoir tourner autour de son axe longitudinal, des moyens pour faire tourner le tube incliné autour de son dit axe longitudinal et plusieurs éléments de chauffage situés dans le four sensiblement sur toute la longueur du tube; une trémie (12) pour recevoir la matière végétale organique; un moyen pour introduire la matière végétale organique de la trémie dans le four à une extrémité du tube et un moyen pour collecter de l'autre extrémité la matière qui a brûlé, appareil caractérisé en ce que le four comporte une sortie (14) de fumée qui conduit à un filtre (15) monté dans un support rotatif (16) et conduisant à un système d'extraction à l'air.

9. Appareil selon la revendication 8, dans lequel le moyen pour introduire la matière végétale organique de la trémie (12) dans le tube (11) comprend un convoyeur à vis (13).

10. Appareil selon la revendication 8, ou la revendication 9, dans lequel le moyen pour collecter la matière ayant brûlé comprend un récipient collecteur (18).

11. Appareil selon l'une quelconque des revendications 8 à 10, dans lequel le four est monté sur une plateforme (19) ayant un moyen pour ajuster l'angle d'inclinaison de la plateforme et donc du tube.

12. Appareil selon la revendication 11, dans lequel le moyen d'ajustement comprend un vérin (20) d'ajustement.

13. Appareil selon la revendication 11 ou la revendication 12, dans lequel la plateforme comporte des roues (21), de sorte que l'appareil est transportable.

14. Appareil selon l'une quelconque des revendications 8 à 13, dans lequel les moyens pour faire tourner le tube sont agencés de façon à faire tourner le tube à une vitesse d'environ 1 tour par minute.
